# FASCICULE DE BREVET EUROPEEN

(11) **EP 3 029 218 B1**
(45) Date de publication et mention de la délivrance du brevet: **28.02.2018**
(21) Numéro de dépôt: 15306871.3
(22) Date de dépôt: 25.11.2015
(51) Int. Cl.: H02G 3/18, E04G 15/06

(54) **REGARD POUR CHAMBRE TÉLÉCOM ENTERRÉE**
HÜLLE FÜR TELEKOM KABEL
UNDERGROUND BOX FOR TELECOM CABLES

(30) Priorité: 28.11.2014 FR 1461652
(43) Date de publication de la demande: 08.06.2016
(73) Titulaire: Bonna Sabla, 92400 Courbevoie (FR)
(72) Inventeur: LOBBE, Eric, 92400 Courbevoie (FR); HENRI, Philippe, 92400 Courbevoie (FR)
(74) Mandataire: Jacobacci Coralis Harle

(56) Documents cités:
- EP-A1- 2 620 564
- US-A- 5 778 625

## Description

La présente invention concerne un regard pour chambre télécom enterrée. Elle a des applications dans le domaine du Génie Civil et de la construction des réseaux de télécommunications.

On connait déjà des chambres télécom enterrées. Elles peuvent être réalisées de nombreuses manières comme par exemple les chambres en béton monobloc. Elles ont l'avantage d'une résistance importante, notamment en compression, mais elles sont relativement lourdes ce qui ne facilite pas leur manipulation et leur installation. Il a donc été proposé de les alléger en utilisant des matières plastiques pour réduire leur poids. Toutefois, les capacités de résistance mécanique en ont souffert et on a donc proposé de combiner les deux types de matériaux au sein de tels regards. C'est ainsi qu'on a proposé dans la demande de brevet EP2620564, un abri comportant une coque creuse rotomoulée, à deux feuillets entre lesquels un béton est coulé. Si cette solution présente des avantages, elle reste cependant d'un poids encore relativement élevé du fait du sandwich réalisé, plastique-béton-plastique de ses parois. En outre, sa résistance mécanique est importante selon toutes les directions principales de contrainte.

On connait également par le document US5778625 un boîtier de réservation avec un rebord pour paroi coulée en béton et qui comporte des moyens de renforcement amovibles retirés une fois le béton solidifié.

Or, dans les applications habituelles, il n'est pas forcément utile que la résistance mécanique soit maximale selon toutes les directions principales de contrainte. En particulier, on peut préférer avoir une résistance en compression verticale maximale et des résistances en compression moindres selon d'autres directions, notamment latérales, mais suffisantes pour les applications envisagées.

On propose donc de profiter des capacités de résistance à la compression du béton pour favoriser une résistance accrue du regard vis-à-vis de la compression verticale pouvant s'exercer sur le regard, notamment pour des applications dans/sur des voies de circulation routière, par rapport aux contraintes latérales classiques du terrain encaissant. A cette fin on met en oeuvre des fourreaux tubulaires remplis de béton et adossés le long des parois latérales du regard qui, en lui-même est constitué d'une coque pleine/à un seul feuillet afin de former des renforts localisés.

Ainsi, l'invention concerne un regard pour chambre télécom enterrée constituée d'une coque monobloc comportant vers le bas une base fermée horizontale, des parois latérales montantes et, vers le haut, un rebord d'ouverture débordant latéralement et délimitant sur toute sa périphérie une ouverture supérieure centrale d'accès à l'intérieur dudit regard.

Selon l'invention, la coque est réalisée par rotomoulage à chaud d'une première matière plastique, et au moins une des parois latérales comporte au moins un fourreau creux montant adossé et fixé le long de ladite au moins une paroi latérale, sur la face extérieure de la paroi latérale, ledit au moins un fourreau creux étant réalisé dans une seconde matière plastique, identique à ou différente de la première matière plastique, et en ce que ledit au moins un fourreau creux est rempli d'une composition à base de ciment afin de former un pilier de composition mixte, matière plastique et ciment, la matière plastique du fourreau creux formant un moule perdu.

Dans divers modes de mise en oeuvre de l'invention, les moyens suivants pouvant être utilisés seuls ou selon toutes les combinaisons techniquement possibles, sont employés :
- les parois latérales montantes sont sensiblement verticales,
- les parois latérales montantes sont inclinées par rapport à la verticale, le regard étant à base plus étendue que le rebord d'ouverture supérieure,
- les parois latérales montantes sont inclinées par rapport à la verticale, le regard étant à base moins étendue que le rebord d'ouverture supérieure,
- le regard présente une forme générale tubulaire,
- le regard présente une forme générale tubulaire à parois latérales verticales,
- le regard présente une forme générale conique tronquée à parois latérales inclinées,
- le regard présente une forme générale parallélépipédique,
- le regard présente une forme générale parallélépipédique à parois latérales verticales,
- le regard présente une forme générale pyramidale tronquée à parois latérales inclinées,
- les parois latérales du regard sont globalement planes,
- les parois latérales de la coque sont pleines avec une face intérieure vers l'intérieur de la chambre et une face extérieure vers l'extérieur de la chambre du regard,
- chaque fourreau creux est fixé sur la face extérieure de la paroi latérale correspondante de la coque de la chambre du regard,
- chaque fourreau creux est fixé par soudure de sa matière plastique à la matière plastique de la paroi latérale correspondante de la coque de la chambre du regard,
- la première matière plastique est du polyéthylène,
- la seconde matière plastique est du polychlorure de vinyle,
- la seconde matière plastique est du polyéthylène,
- le polyéthylène est du polyéthylène recyclé,
- le polyéthylène est du polyéthylène de moyenne densité,
- au moins certaines des parois latérales comportent des zones de fragilisation destinées à permettre, après suppression, le passage de conduites contenant des câbles de communication et/ou d'alimentation électrique,
- ledit au moins un fourreau creux est un élément rapporté fixé sur ladite au moins une paroi latérale,
- ledit au moins un fourreau creux a, en section transversale, une paroi périphérique continue, la composition à base de ciment étant retenue sur son pourtour par la seule paroi périphérique du fourreau creux,
- ledit au moins un fourreau creux a, en section transversale avant installation sur la paroi latérale, une paroi périphérique discontinue car ouverte par une ouverture montante bordée par deux bords montants, la composition à base de ciment étant retenue pour une partie de son pourtour par la paroi périphérique du fourreau creux et pour l'autre partie de son pourtour par une partie de la paroi latérale correspondante,
- la paroi latérale comporte en vis-à-vis de chacun des deux bords montants de chaque fourreau creux discontinu, des gouttières montantes de réception et ajustées pour recevoir intérieurement lesdits bords montant,
- ledit au moins un fourreau creux est fermé vers le haut par le fond du rebord d'ouverture et ouvert vers le bas par un orifice, la composition à base de ciment étant introduite dans ledit au moins un fourreau creux par ledit orifice,
- ledit au moins un fourreau creux est fermé vers le bas, à sa base, et ouvert vers le haut par un orifice débouchant dans un fond du rebord d'ouverture, la composition à base de ciment étant introduite dans ledit au moins un fourreau creux par ledit orifice du fond du rebord d'ouverture,
- le regard comporte en outre dans le rebord d'ouverture un cadre métallique de réception d'une plaque de fermeture, ledit cadre comportant des pattes de scellement et le canal de retenue du rebord d'ouverture comporte en outre dans son fond des puits de scellement en correspondance avec les pattes de scellement,
- le rebord d'ouverture comporte en lui-même ou du fait qu'un cadre métallique de réception d'une plaque de fermeture est installé dans ledit rebord, un canal de retenue d'une composition à base de ciment, identique ou non à celle des piliers, qui est en outre répandue dans ledit canal de retenue, ledit canal de retenue étant délimité vers le bas par le fond du rebord d'ouverture et d'un côté latéral, vers l'extérieur, par un bord montant du rebord d'ouverture et de l'autre côté latéral, vers l'intérieur, par un bord montant intérieur du rebord d'ouverture ou par le cadre métallique selon le cas,
- les orifices des fourreaux creux débouchent dans le fond du canal de retenue,
- les compositions à base de ciment du/des fourreaux et du rebord d'ouverture sont identiques,
- la composition à base de ciment du/des fourreaux creux n'est pas ferraillée,
- la composition à base de ciment du/des fourreaux creux est ferraillée,
- la composition à base de ciment du rebord d'ouverture n'est pas ferraillée,
- la composition à base de ciment du rebord d'ouverture est ferraillée,
- le ferraillage des fourreaux est séparé du ferraillage du rebord d'ouverture,
- le ferraillage des fourreaux est commun au ferraillage du rebord d'ouverture,
- le ferraillage des fourreaux correspond à des pattes de scellement allongées du cadre métallique,
- le rebord d'ouverture de la coque ne comporte pas de puits de scellement, le cadre métallique ayant des pattes de scellement descendant dans les fourreaux,
- la/les compositions à base de ciment sont en outre ferraillées et on introduit dans ledit au moins un fourreau creux, avant l'introduction de la composition à base de ciment, des fers dont une partie descend dans ledit au moins un fourreau creux et une autre partie s'étend horizontalement dans le canal de retenue du rebord d'ouverture,
- la/les formes dudit au moins un fourreau creux et, selon le cas, de la paroi latérale correspondante, sont choisies de manière à pouvoir réaliser des piliers dont la composition à base de ciment présente une section transversale circulaire, semi-circulaire, carrée ou rectangulaire,
- le piler a une section constante sur toute sa hauteur,
- le pilier a une section variant progressivement le long de sa hauteur.

La présente invention va maintenant être exemplifiée sans pour autant en être limitée avec la description qui suit en relation avec la figure suivante:
- la Figure 1 qui représente une vue en perspective latérale d'un exemple de réalisation d'un regard télécom selon l'invention,
- la Figure 2 qui représente une vue en perspective selon une autre orientation du regard télécom de la Figure 1,
- la Figure 3 qui représente une vue en perspective selon encore une autre orientation du regard télécom de la Figure 1,
- la Figure 4 qui représente une vue de dessous du regard télécom de la Figure 1,
- la Figure 5 qui représente une vue latérale de petit côté du regard télécom de la Figure 1,
- la Figure 6 qui représente une vue en coupe longitudinale selon le plan A-A de la Figure 5, et
- la Figure 7 qui représente en perspective un agrandissement d'une partie du rebord d'ouverture du regard télécom de la Figure 1.

Dans son principe l'invention consiste à réaliser une coque monobloc par rotomoulage d'une matière plastique, la coque comportant vers le bas un fond ou base fermée, des parois latérales montantes et vers le haut un rebord d'ouverture délimitant une ouverture d'accès à l'intérieur dudit regard. Globalement, la coque ne comporte qu'un seul feuillet, c'est-à-dire que sa face intérieure est tournée vers l'intérieur du volume de la chambre délimitée par le regard et sa face extérieure est tournée vers l'extérieur et donc le terrain encaissant, ses parois sont donc pleines. Sur les parois latérales montantes de cette coque sont réalisés ou fixés des fourreaux ou tubes creux montants en matière plastique dans lesquels est coulée une composition à base de ciment et afin de former des colonnes ou piliers mixtes matière plastique (externe) et ciment (interne). Ces colonnes ou piliers montants sont parallèles entre eux le long de la paroi latérale montante. De préférence ces colonnes ou piliers solidaires des parois latérales sont disposés le long des parois latérales de longueur, les parois latérales de largeurs étant de préférence destinées à recevoir des canalisations et/ou câbles de communication.

Typiquement, la coque a une forme générale parallélépipédique en général avec deux parois latérales opposées sur la longueur et deux parois latérales opposées sur la largeur. On envisage cependant d'autres formes que rectangulaire en section horizontale et notamment de forme carrée ou polygonale voire circulaire ou plus complexe encore.

Le fourreau peut être un tube complet ou un hémi-tube, dans ce dernier cas, le fourreau n'est pas totalement fermé latéralement et la fermeture latérale de la colonne est finalement constituée d'une partie provenant de la coque et d'une partie propre au fourreau/tube.

Dans une modalité particulière de réalisation, les parois latérales sont toutes verticales ou au moins les parois de la longueur qui comportent les colonnes/piliers. Pour le remplissage des fourreaux/tubes creux par la composition à base de ciment deux possibilités sont offertes en fonction de l'extrémité haute ou basse du fourreau/tube qui est fermée. En effet et de préférence, une seule des deux extrémités, haute ou basse, du fourreau/tube est fermée par construction. Si c'est l'extrémité haute qui est fermée (le fond du rebord d'ouverture est continu), on remplit le fourreau/tube par son ouverture du bas après avoir retourné le regard pour que sa base/son fond se retrouve vers le haut. Si c'est l'extrémité basse qui est fermée, on remplit le fourreau/tube par son ouverture du haut qui débouche dans le fond du rebord d'ouverture de la coque. Cette dernière solution présente l'avantage qu'il est alors possible de couler la composition à base de ciment à la fois pour réaliser les colonnes/piliers pastique-ciment et à la fois réaliser une couronne à base de ciment sur le rebord d'ouverture du regard et qui permet de sceller un cadre métallique de réception d'un couvercle de fermeture du regard.

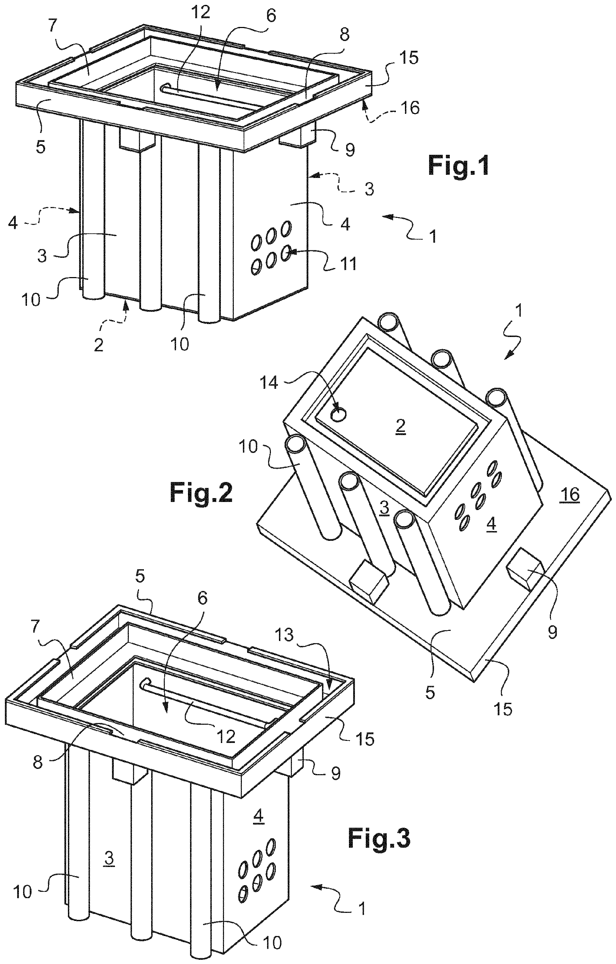

Sur la Figure 1, un regard parallélépipédique 1 est constitué d'une coque rotomoulée monobloc en matière plastique. Cette coque comporte une base ou fond 2 horizontal, deux parois latérales verticales opposées de longueur 3 et deux parois latérales verticales opposées de largeur 4 et d'un rebord d'ouverture 5 ou couronne. Des fourreaux ou tubes creux 10 verticaux sont solidaires des deux parois latérales verticales opposées de longueur 3. Dans cet exemple, les fourreaux ont été réalisés séparément de la coque et ont ensuite été fixés sur la coque, de préférence par soudure entre matières plastiques de la coque et des fourreaux. Dans des variantes de réalisation, les fourreaux peuvent être réalisés en partie ou totalité sur et en même temps que la coque au lieu d'être rapportés.

Ces fourreaux/tubes 10 ont été remplis par leur extrémité côté base par un béton de ciment suite au retournement de la coque car les fourreaux sont ici fermés à leur extrémité haute côté du rebord d'ouverture 5. Le nombre et la taille des fourreaux varient en fonction de la résistance à la compression haut-bas que l'on souhaite pour le regard. On a ici trois colonnes/piliers par paroi latérale de longueur. Les parois latérales de largeur n'ont pas ici de colonne/pilier mais dans des variantes de réalisation elles peuvent en comporter. Par contre ces parois latérales de largeur ont des moyens de réalisation de passages 11 pour des conduites et/ou câbles de communication : ces moyens étant, soit un affaiblissement de paroi, soit carrément des ouvertures traversantes.

Afin de faciliter l'accès à l'intérieur de la chambre définie par la coque du regard, un barreau 12 d'échelle sur la face interne d'une des deux parois latérales de longueur 3 a été représenté. La base/fond 2 comporte de préférence un orifice de vidange 14 qui peut être fermé par un bouchon de vidange et qui permet une évacuation éventuelle d'eau (notamment eau de pluie et plus généralement de liquides) au cas où de l'eau aurait pu entrer par accident dans la chambre définie par la coque du regard.

Les Figures 2 à 6 fournissent d'autres vues du regard de la Figure 1. Dans cet exemple, le regard présente les dimensions approximatives suivantes : hauteur 635 mm, hauteur de tube 570 mm, diamètre intérieur de tube 40 mm, épaisseur de paroi de tube 5 mm, distance horizontale sur une paroi latérale de longueur entre deux tubes 200 mm, hauteur du rebord d'ouverture 65 mm, longueur du rebord d'ouverture 784 mm, largeur du rebord d'ouverture 643 mm, longueur de paroi latérale (3) 530 mm, largeur de paroi latérale (4) 370 mm, épaisseur moyenne des différentes faces de la coque 5 mm.

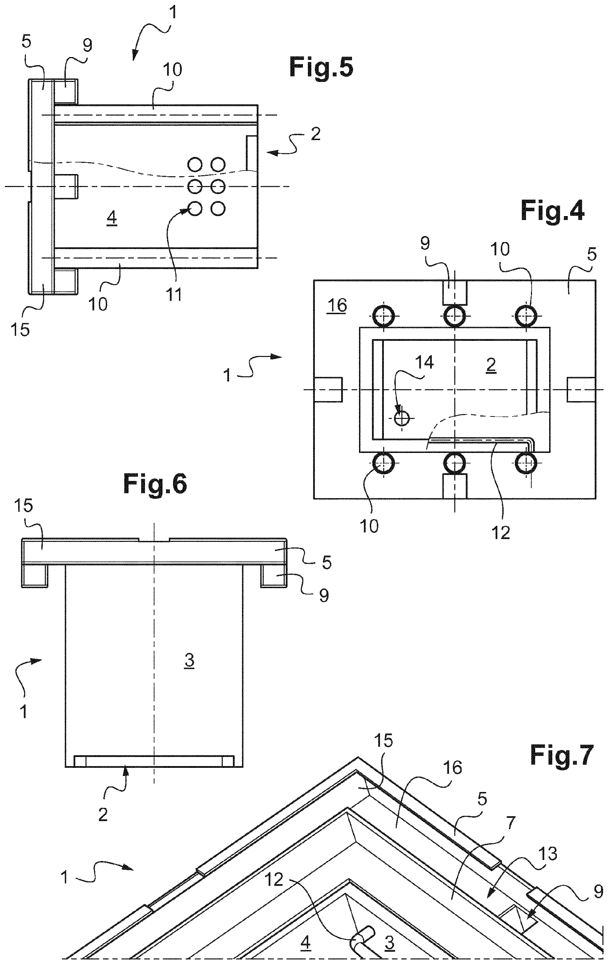

Le rebord d'ouverture 5 présente des particularités qui vont être détaillées notamment en relation avec la Figure 7. Le rebord d'ouverture 5 forme une couronne/ceinturage autour de l'ouverture du haut de la chambre du regard. Ce rebord d'ouverture 5 s'étend latéralement vers l'extérieur et comporte à la suite des parois latérales une première partie sensiblement horizontale ou fond 16 de largeur d'environ 136 mm se poursuivant vers l'extérieur par une seconde partie verticale 15 de hauteur d'environ 65 mm. Dans cet exemple de réalisation, les fourreaux/tubes 10 ne communiquent pas/ne débouchent pas avec/dans le rebord d'ouverture, la partie horizontale du rebord d'ouverture 5 étant continue à leur niveau.

De préférence, le regard présente dans ses parties principales une certaine symétrie selon un plan vertical médian longitudinal, aux accessoires près : notamment bouchon de vidange, barreau d'échelle. Il peut également présenter dans ses parties principales une certaine symétrie selon un plan vertical médian transversal, toujours aux accessoires près.

Un cadre métallique 7 est disposé dans le rebord d'ouverture. Ce cadre métallique est constitué d'un profilé de section en L et comporte des pattes de scellement 8 qui descendent dans des puits de scellement 9 réalisés dans la partie horizontale du rebord d'ouverture 5. Du fait de la forme en L du cadre métallique 7, il est formé un canal de retenue 13 entre la partie verticale 15 (vers l'extérieur du canal) du rebord d'ouverture 5, le cadre métallique 7 (vers l'intérieur du canal) et une partie de la partie horizontale 16 du rebord d'ouverture 5 (vers le fond du canal). On peut remarquer que les puits de scellement débouchent dans le fond du canal de retenue 13. Grâce à cette structure de canal de retenue, il est créé une forme de moulage et on y verse un béton qui va permettre de sceller le cadre métallique à la coque du regard. En utilisation, on dispose une plaque de fermeture métallique (non représentée), notamment en fonte, dans le cadre métallique 7 afin de fermer par le haut la chambre du regard. On peut prévoir des moyens de verrouillage entre le cadre métallique 7 et la plaque de fermeture.

On comprend que le principe de l'invention avec ses colonnes en béton peut être mis en oeuvre de nombreuses autres manières, notamment avec des formes de fourreaux différentes (sections carrées, rectangulaires, coniques tronquées, non fermées à l'origine...), des nombres de fourreaux différents, des procédés de fixation des fourreaux à la coque différents, la possibilité de mettre en relation l'intérieur des fourreaux et le rebord de fermeture (notamment pour effectuer une seule coulée de béton pour à la fois remplir les fourreaux et sceller le cadre métallique), des tailles et formes différentes de coques, etc. En outre, la composition à base de ciment peut être de tout type, par exemple un béton simple, un béton alvéolé, un béton fibré, un béton armé, voire un mortier, et elle est choisie en fonction de la résistance, notamment à la compression, que l'on souhaite pour le regard. En effet, le regard enterré de l'invention peut être mis en oeuvre dans diverses situations où il peut être soumis à des charges en compression plus ou moins importantes. En particulier, il peut être installé dans une chaussée de circulation de véhicules automoteurs allant des motocyclettes en passant par des automobiles et jusqu'aux camions dont les poids à l'essieu peuvent être conséquents. Dans de tels cas, on installera un regard à haute résistance, en particulier résistance à la compression, et on utilisera donc de préférence un béton armé avec ferraillage. Dans d'autres applications où il n'est pas nécessaire de bénéficier d'une résistance considérable, notamment en compression, on utilisera un béton simple, voire fibré si la résistance doit être supérieure à celle du béton simple. On comprend, qu'en outre ou alternative, on peut agir sur le nombre et/ou la forme et/ou les dimensions des piliers pour réaliser des regards plus ou moins résistants. Enfin, si le regard est à la base destiné à la réalisation d'une chambre télécom enterrée, on peut l'utiliser dans d'autres applications de réseaux que les télécommunications.

## Revendications

1. Regard (1) pour chambre télécom enterrée constituée d'une coque monobloc comportant vers le bas une base (2) fermée horizontale, des parois latérales montantes (3, 4) et, vers le haut, un rebord d'ouverture (5) délimitant sur toute sa périphérie une ouverture (6) supérieure centrale d'accès à l'intérieur dudit regard, la coque est réalisée par rotomoulage à chaud d'une première matière plastique pour former une base et des parois latérales pleines à un seul feuillet
**caractérisé en ce que** le rebord d'ouverture (5) déborde latéralement et **en ce qu'**au moins un tube creux est étendu entre le bas et le haut de la coque et est adossé et fixé le long de ladite au moins une paroi latérale, sur la face extérieure de ladite paroi latérale, ledit au moins un tube creux (10) étant réalisé dans une seconde matière plastique, identique à ou différente de la première matière plastique, et **en ce que** ledit au moins un tube creux est rempli d'une composition à base de ciment afin de former un pilier de composition mixte, matière plastique en périphérie et ciment intérieurement, la matière plastique du tube creux formant un moule perdu.

2. Regard selon la revendication 1, **caractérisé en ce que** ledit au moins un tube creux (10) est un élément rapporté fixé sur ladite au moins une paroi latérale (3, 4).

3. Regard selon l'une des revendications 1 et 2, **caractérisé en ce que** ledit au moins un tube creux (10) a, en section transversale, une paroi périphérique continue, la composition à base de ciment étant retenue sur son pourtour par la seule paroi périphérique du tube creux.

4. Regard selon la revendication 2, **caractérisé en ce que** ledit au moins un tube creux (10) a, en section transversale avant installation sur la paroi latérale, une paroi périphérique discontinue car ouverte par une ouverture montante bordée par deux bords montants, la composition à base de ciment étant retenue pour une partie de son pourtour par la paroi périphérique du tube creux et pour l'autre partie de son pourtour par une partie de la paroi latérale (3, 4) correspondante.

5. Regard selon la revendication 4, **caractérisé en ce que** la paroi latérale (3, 4) comporte en vis-à-vis de chacun des deux bords montants de chaque tube creux (10) discontinu, des gouttières montantes de réception et ajustées pour recevoir intérieurement lesdits bords montants.

6. Regard selon l'une quelconque des revendications précédentes, **caractérisé en ce que** ledit au moins un tube creux (10) est fermé vers le bas, à sa base, et ouvert vers le haut par un orifice débouchant dans un fond (16) du rebord d'ouverture (5), la composition à base de ciment étant introduite dans ledit au moins un tube creux (10) par ledit orifice du fond (16) du rebord d'ouverture (5).

7. Regard selon l'une quelconque des revendications précédentes, **caractérisé en ce que** le rebord d'ouverture (5) comporte en lui-même ou du fait qu'un cadre métallique (7) de réception d'une plaque de fermeture est installé dans ledit rebord d'ouverture (5), un canal de retenue (13) d'une composition à base de ciment, identique ou non à celle des piliers, qui est en outre répandue dans ledit canal de retenue (13), ledit canal de retenue (13) étant délimité vers le bas par le fond (16) du rebord d'ouverture (5) et d'un côté latéral, vers l'extérieur, par un bord montant (15) du rebord d'ouverture (5) et de l'autre côté latéral, vers l'intérieur, par un bord montant intérieur du rebord d'ouverture ou par le cadre métallique (7) selon le cas.

8. Regard selon la revendication 7, **caractérisé en ce qu'**il comporte en outre dans le rebord d'ouverture (5) un cadre métallique (7) de réception d'une plaque de fermeture, ledit cadre (7) comportant des pattes de scellement (8) et **en ce que** le canal de retenue (13) du rebord d'ouverture (5) comporte en outre dans son fond (16) des puits de scellement (9) en correspondance avec les pattes de scellement (8).

9. Regard selon l'une des revendications 7 et 8 combinée à la 6, **caractérisé en ce que** la/les compositions à base de ciment sont en outre ferraillées et **en ce que** l'on introduit dans ledit au moins un tube creux (10), avant l'introduction de la composition à base de ciment, des fers dont une partie descend dans ledit au moins un tube creux (10) et une autre partie s'étend horizontalement dans le canal de retenue (13) du rebord d'ouverture (5).

10. Regard selon l'une quelconque des revendications précédentes, **caractérisé en ce que** la/les formes dudit au moins un tube creux (10) et, selon le cas, de la paroi latérale (3, 4) correspondante, sont choisies de manière à pouvoir réaliser des piliers dont la composition à base de ciment présente une section transversale circulaire, semi-circulaire, carrée ou rectangulaire.

## Patentansprüche

1. Schacht (1) für eine unterirdische Telekom-Kammer, die aus einer einstückigen Schale gebildet ist, die nach unten hin eine horizontal geschlossene Basis (2), aufsteigende Seitenwände (3, 4) und, nach oben hin, einen Öffnungsrand (5) aufweist, der auf seinem gesamten Umfang eine obere zentrale Öffnung (6) für den Zugang zum Inneren des Schachts begrenzt, wobei die Schale durch heiße Rotationsformung eines ersten Plastikmaterials geformt ist, um eine Basis und massive Seitenwände aus einem Blatt zu bilden,
**dadurch gekennzeichnet, daß** der Öffnungsrand (6) seitlich übersteht und daß sich zwischen der Oberseite und der Unterseite der Schale auf der Außenseite der Seitenwand wenigstens ein hohles Rohr erstreckt und an der wenigstens einen Seitenwand angelehnt und befestigt ist, wobei das wenigstens eine hohle Rohr (10) aus einem zweiten Plastikmaterial gefertigt ist, das mit dem ersten Plastikmaterial identisch oder von diesem verschieden ist, und daß das wenigstens eine hohle Rohr mit einer Mischung auf Zementbasis gefüllt ist, um einen gemischt zusammengesetzten Pfeiler, Plastikmaterial außen herum und Zement im Inneren, zu bilden, wobei das Plastikmaterial des hohlen Rohrs eine verlorene Form bildet..

2. Schacht gemäß Anspruch 1, **dadurch gekennzeichnet, daß** das wenigstens eine hohle Rohr (10) ein hinzugefügtes Element ist, das auf der wenigstens einen Seitenwand (3, 4) befestigt ist.

3. Schacht gemäß einem der Ansprüche 1 und 2, **dadurch gekennzeichnet, daß** das wenigstens eine hohle Rohr (10) im Querschnitt eine durchgehende Umfangswand aufweist, wobei die Mischung auf Zementbasis an seinem Umfang allein durch die Umfangswand des hohlen Rohrs zurückgehalten wird.

4. Schacht gemäß Anspruch 2, **dadurch gekennzeichnet, daß** das wenigstens eine hohle Rohr (10) im Querschnitt vor dessen Anbringen auf der Seitenwand eine nicht durchgehende Umfangswand aufweist, weil sie durch eine aufsteigende, durch zwei aufsteigende Ränder begrenzte Öffnung geöffnet ist, wobei die Mischung auf Zementbasis auf einem Teil ihres Umfangs durch die Umfangswand des hohlen Rohrs und auf dem anderen Teil ihres Umfangs durch einen Teil der entsprechenden Seitenwand (3, 4) zurückgehalten wird.

5. Schacht gemäß Anspruch 4, **dadurch gekennzeichnet, daß** die Seitenwand (3, 4) gegenüber jedem der beiden aufsteigenden Ränder jedes der nicht durchgehenden hohlen Rohre (10) aufsteigende Aufnahmerinnen aufweist, die dazu ausgelegt sind, im Inneren die aufsteigenden Ränder aufzunehmen.

6. Schacht gemäß einem der vorangehenden Ansprüche, **dadurch gekennzeichnet, daß** das wenigstens eine hohle Rohr (10) nach unten hin an seiner Basis geschlossen ist und nach oben hin durch ein Loch geöffnet ist, das in einen Boden (16) des Öffnungsrands (5) mündet, wobei die Mischung auf Zementbasis durch das Loch des Bodens (16) des Öffnungsrands (5) in das wenigstens eine hohle Rohr (10) eingebracht wird.

7. Schacht gemäß einem der vorangehenden Ansprüche, **dadurch gekennzeichnet, daß** der Öffnungsrand (5) von sich aus oder durch die Tatsache, daß ein Metallrahmen (7) zum Aufnehmen einer Verschlußplatte in dem Öffnungsrand (5) installiert ist, einen Kanal (13) zum Zurückhalten einer mit jener der Pfeiler identischen oder von dieser verschiedenen Mischung auf Zementbasis aufweist, die außerdem in dem Rückhaltekanal (13) ausgebreitet ist, wobei der Rückhaltekanal (13) nach unten hin durch den Boden (16) des Öffnungsrands (5) und auf einer seitlichen Seite nach außen hin durch einen aufsteigenden Rand (15) des Öffnungsrands (5) und auf der anderen seitlichen Seite nach innen hin durch einen inneren aufsteigenden Rand des Öffnungsrands oder, je nach Fall, durch den Metallrahmen begrenzt ist.

8. Schacht gemäß Anspruch 7, **dadurch gekennzeichnet, daß** er außerdem im Öffnungsrand (5) einen Metallrahmen (7) zum Aufnehmen einer Verschlußplatte aufweist, wobei der Rahmen (7) Verschlußzapfen (8) aufweist, und daß der Rückhaltekanal (13) des Öffnungsrands (5) außerdem auf seinem Boden (16) in Übereinstimmung mit den Verschlußzapfen (8) Verschlußvertiefungen (9) aufweist.

9. Schacht gemäß einem der Ansprüche 7 und 8, kombiniert mit Anspruch 6, **dadurch gekennzeichnet, daß** die Mischung(en) auf Zementbasis außerdem eisenverstärkt ist (sind) und daß in das wenigstens eine hohle Rohr (10) vor dem Einbringen der Mischung auf Zementbasis Eisenstäbe eingeführt werden, von denen ein Teil in das wenigstens eine hohle Rohr (10) hineinreicht und ein anderer Teil sich horizontal in dem Rückhaltekanal (13) des Öffnungsrands (5) erstreckt.

10. Schacht gemäß einem der vorangehenden Ansprüche, **dadurch gekennzeichnet, daß** die Form(en) des wenigstens einen hohlen Rohrs (10) und gegebenenfalls der entsprechenden Seitenwand (3, 4) so gewählt sind, daß sie Pfeiler formen können, deren Mischung auf Zementbasis einen kreisrunden, halbrunden, quadratischen oder rechteckigen Querschnitt aufweisen.

## Claims

1. A manhole (1) for a buried telecom chamber consisted of a single-piece shell having towards the bottom a horizontal closed base (2), rising lateral walls (3, 4) and, towards the top, an opening flange (5) delimiting over its whole periphery a central upper opening (6) for access to the inside of said manhole, the shell being made by hot rotational moulding of a first plastic material to form a base and single-foil solid lateral walls,
**characterized in that** the opening flange (5) protrudes laterally and **in that** at least one hollow tube is extended between the bottom and the top of the shell and is stood against and fixed along said at least one lateral wall, on the external face of said lateral wall, said at least one hollow tube (10) being made from a second plastic material, identical to or different from the first plastic material, and **in that** said at least one hollow tube is filled with a cement-based composition in order to form a pillar of mixed composition, plastic material at the periphery and cement internally, the plastic material of the hollow tube forming a dead mould.

2. The manhole according to claim 1, **characterized in that** said at least one hollow tube (10) is an added element fixed to said at least one lateral wall (3, 4).

3. The manhole according to one of claims 1 and 2, **characterized in that** said at least one hollow tube (10) has, in cross-section, a continuous peripheral wall, the cement-based composition being held at its perimeter by the only peripheral wall of the hollow tube.

4. The manhole according to claim 2, **characterized in that** said at least one hollow tube (10) has, in cross-section, before installation on the lateral wall, a peripheral wall that is discontinuous because open by a rising opening lined with two rising edges, the cement-based composition being held, for a part of its perimeter, by the peripheral wall of the hollow tube, and for the other part of its perimeter, by a part of the corresponding lateral wall (3, 4).

5. The manhole according to claim 4, **characterized in that** the lateral wall (3, 4) includes opposite to each of the two rising edges of each discontinuous hollow tube (10), rising receiving gutters, adjusted to receive internally said rising edges.

6. The manhole according to any one of the preceding claims, **characterized in that** said at least one hollow tube (10) is closed towards the bottom, at its base, and open towards the top by a through-orifice in a bottom (16) of the opening flange (5), the cement-based composition being introduced into said at least one hollow tube (10) through said orifice of the bottom (16) of the opening flange (5).

7. The manhole according to any one of the preceding claims, **characterized in that** the opening flange (5) includes in itself or due to the fact that a metal frame (7) for receiving a closing plate is installed in said opening flange (5), a holding channel (13) for a cement-based composition, identical or not to that of a pillars, which is further spread in said holding channel (13), said holding channel (13) being delimited towards the bottom by the bottom (16) of the opening flange (5) and, on a lateral side, towards the outside, by a rising edge (15) of the opening flange (5) and, on the other lateral side, towards the inside, by an internal rising edge of the opening flange or by the metal frame (7), according to the case.

8. The manhole according to claim 7, **characterized in that** it further includes, in the opening flange (5), a metal frame (7) for receiving a closing plate, said frame (7) including sealing tabs (8), and **in that** the holding channel (13) of the opening flange (5) further includes, in its bottom (16), sealing wells (9) matching with the sealing tabs (8).

9. The manhole according to claims 7 and 8, combined with claim 6, **characterized in that** the cement-based composition(s) are further armoured and **in that** it is introduced into said at least one hollow tube (10), before the introduction of the cement-based composition, reinforcement bars, a part of which goes down into said at least one hollow tube (10), and another part of which extends horizontally into the holding channel (13) of the opening flange (5).

10. The manhole according to any one of the preceding claims, **characterized in that** the form(s) of said at least one hollow tube (10) and, according to the case, of the corresponding lateral wall (3, 4), are chosen so that pillars whose cement-based composition has a circular, semi-circular, square or rectangular cross-section can be made.
